# EUROPEAN PATENT SPECIFICATION

(11) **EP 4 230 875 B1**
(45) Date of publication and mention of the grant of the patent: **24.07.2024**
(21) Application number: 22157533.5
(22) Date of filing: 18.02.2022
(51) Int. Cl.: F15B 15/14, F15B 15/20, F15B 15/26, F15B 11/12, F15B 13/043, A01B 63/00, F16K 31/00, F15B 13/04

(54) **CENTERING ELECTRO-HYDRAULIC LIFT-O-MATIC SYSTEM**
ELEKTROHYDRAULISCHES LIFT-O-MATIC-SYSTEM MIT ZENTRIERUNG
SYSTÈME LIFT-O-MATIC ÉLECTRO-HYDRAULIQUE À CENTRAGE

(43) Date of publication of application: 23.08.2023
(73) Proprietor: Turk Traktor Ve Ziraat Makineleri Anonim Sirketi, 06560 Ankara (TR)
(72) Inventor: ERKAL, GUL, ANKARA (TR); ATASOY, ATAKAN, ANKARA (TR); MELEZ, MURAT, ANKARA (TR)
(74) Representative: Yalçiner Patent and Consulting Ltd.

(56) References cited:
- WO-A1-2004/020840
- DE-A1- 10 162 819
- DE-A1- 2 952 235

## Description

### TECHNICAL FIELD OF THE INVENTION

The invention is related to a system named centering electro-hydraulic Lift-O-Matic system.

### KNOWN STATE OF THE ART (PRIOR ART)

In the known state of the art, in order to bring the hydraulic lifting arms controlled mechanically to the desired position, the mechanism triggering this arm is controlled by a lever motion by the user. Since this system is frequently resorted to in daily use, it can be tiresome for the user.

In the present system, the movement is provided with a spiral and spring system.

In the known art, there are electric systems used as double solenoid and three-position. However, the electric systems cannot operate efficiently in heavy and dirty operating conditions and face the risk of malfunctioning at any time.

DE10162819A1 discloses a hydraulic control valve with a valve housing, a valve slide and a control piston, the valve slide and the control piston being mounted in the valve housing in an axially displaceable manner.

### THE BRIEF DESCRIPTION AND PURPOSES OF THE INVENTION

In order to eliminate the above-mentioned disadvantages and bring new advantages to the related technical field, the present invention provides a centering electro-hydraulic Lift-O-Matic system with the features set forth in claim 1. Preferred embodiments of the invention are defined in the dependent claims.

In the said invention, thanks to the hydraulic mechanism, the user can give motion to the system easily by only pressing a button, without applying any force.

In the system developed by the invention, the motion is achieved by a valve slider functioning as a double-acting cylinder, one centering spring and two solenoids. With this mechanism, it is activated with a three-position key, without needing mechanical force. Since the valve is three-position, the system has the option of the tractor lifting mechanism being controlled by the user with the internal-external control button.

In addition, in order to prevent the entry of dust, sand, mud, etc. substances from the outside, felt ring (sealing member) and bellow; Teflon o-ring (sealing member) and bearings which will provide better sealing and lower friction force were used.

### Description of the Figures Illustrating the Invention

The figures used in order to better describe the electro-hydraulic Lift-O-Matic/lift-automatic system developed by the invention are as follows.
Figure 1: View of the Hydraulic Diagram at Position "0"

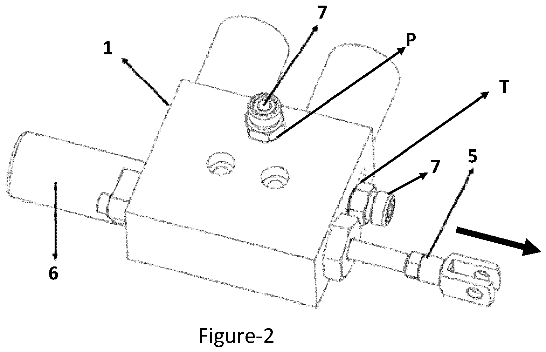

Figure 2: View of the Hydraulic Diagram at Position "b"

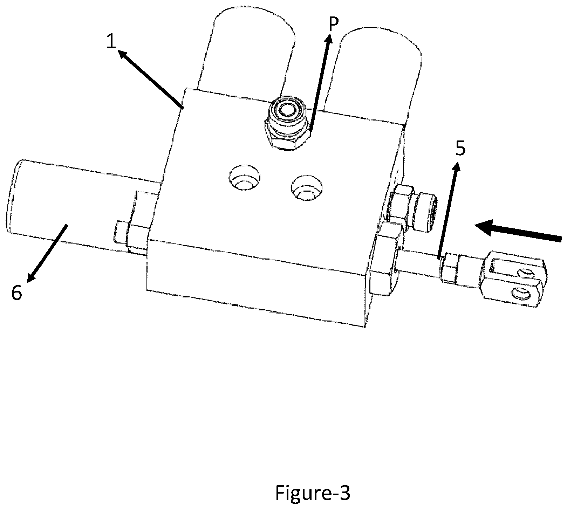

Figure 3: View of the Hydraulic Diagram at Position "a"

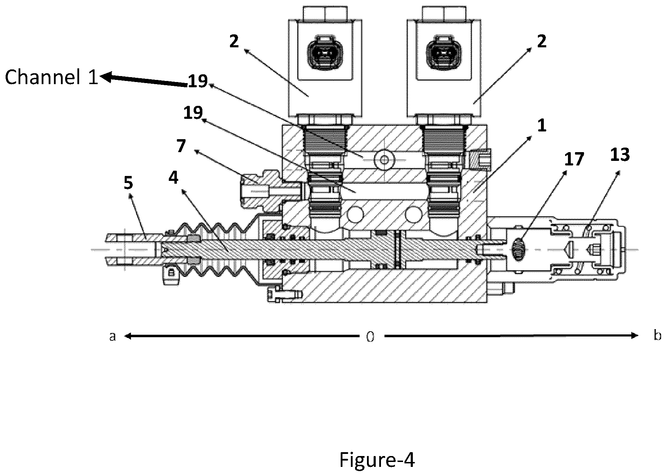

Figure 4: Sectional view - Position "0" View

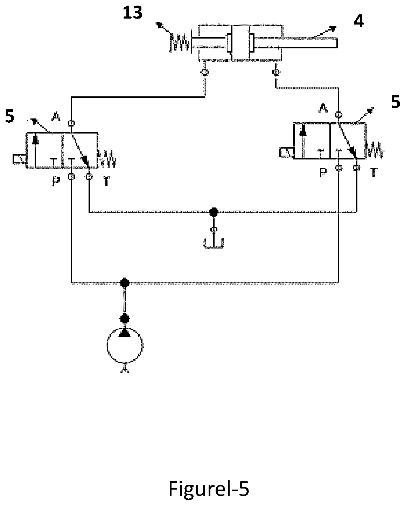

Figure 5: Hydraulic Diagram 1 - Position "0" View

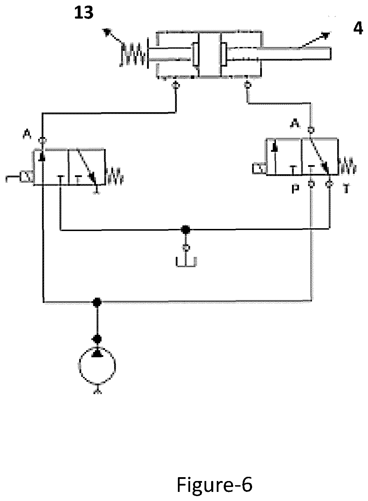

Figure 6: Hydraulic Diagram 2 - Solenoid 1 Active View

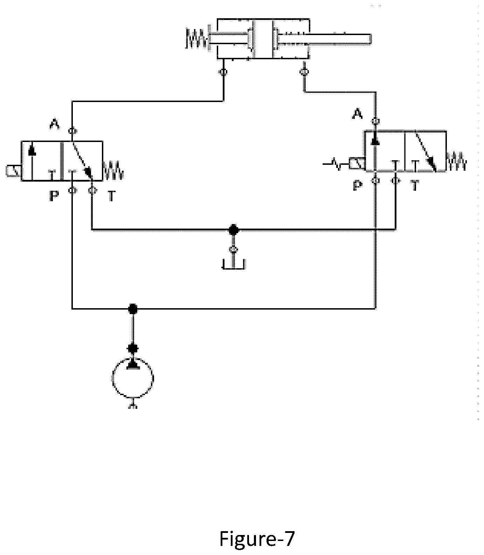

Figure 7: Hydraulic Diagram 3 - Solenoid 2 Active View

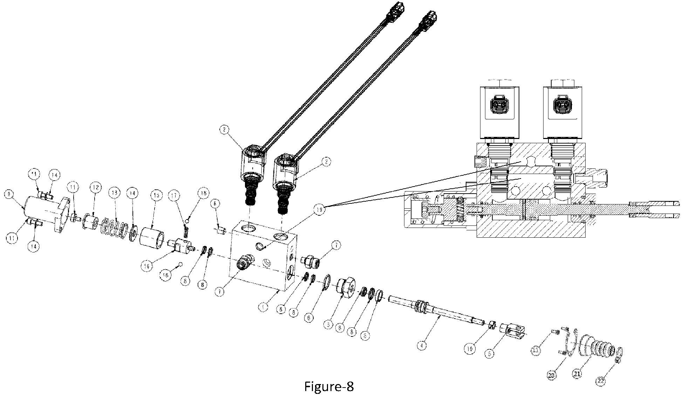

Figure 8: Demounted View of the Lift-O-Matic System

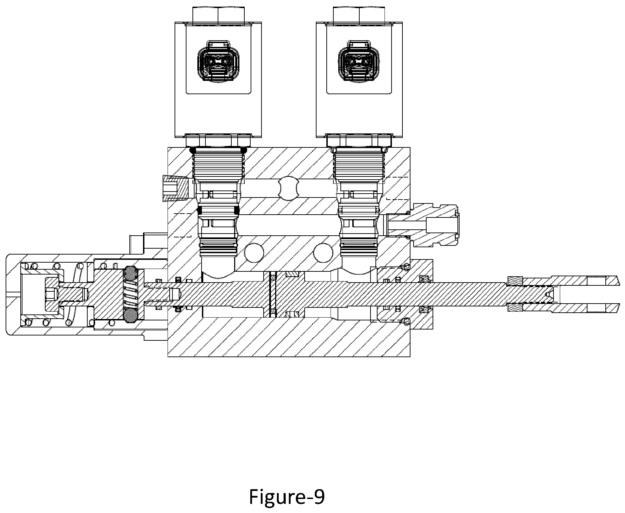

Figure 9: Sectional View of the Lift-O-Matic valve

### Description of the Element and Parts of the Invention

The parts and elements in the electro-hydraulic Lift-O-Matic system developed with this invention are individually numbered and given below.
- 1: Valve Body
- 2: Solenoid Valves
- 3: Plug
- 4: Valve Slider
- 5: Fork Head
- 6: Plug
- 7: Nipple
- 8: Sealing Member
- 9: Centering Lid
- 10: Nut
- 11: Bolt
- 12: Spring Stopper
- 13: Centering Spring
- 14: Washer
- 15: Locking Socket
- 16: Ball Socket
- 17: Locking Spring
- 18: Precision Ball
- 19: Valve channels
P - Pump
T - Tank Line (Return Line)
- 20: Bellows Stopper
- 21: Bellows
- 22: Clip

### DETAILED DESCRIPTION OF THE INVENTION

In this detailed description, the invention is described with examples which will not create any limiting effect, only for the better understanding of the subject.

In the tractors, three-point linkage system is used to lift the equipment. The three-point linkage system is hydraulically triggered within the lifter. The Lift-O-Matic system is the mechanism that controls the hydraulic lifter mechanically by hand. This mechanism causes making more arm movements and applying more force during use.

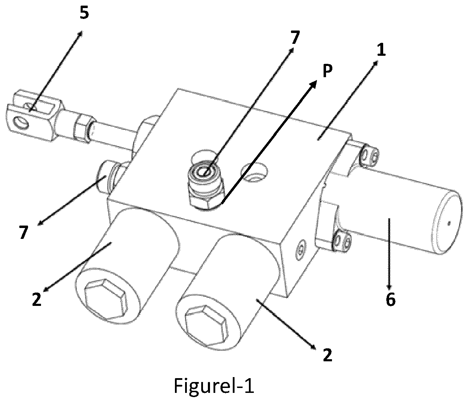

In the Figure 1 aiding in illustrating the invention: view of the hydraulic diagram at position "0," in Figure-2: view of the hydraulic diagram at position "b," in Figure-3: view of the hydraulic diagram at position "a," in Figure-4: sectional view - position "0" view, in Figure-5: hydraulic diagram 1 - position "0" view, in Figure-6: hydraulic diagram 2 - solenoid 1 active view, in Figure-7: hydraulic diagram 3 - solenoid 2 active view, in Figure-8: demounted view of the Lift-O-Matic system, in Figure-9: sectional view of the Lift-O-Matic valve takes place.

For the operation of the hydraulic system, actuator, pump (P), and tank (T) lines should be present to pressurize the line.

Valve body (1), solenoid (2), piston, detention, centering spring (13) and valve channels are the main components of the system. In the system, at least 2 solenoid valves (2) are required.

Detention mechanism is the mechanism which provides keeping the valve slider in the middle position in addition to the centering spring (13) when there is no pressure. This mechanism is composed of a locking spring (17), precision balls (18) and locking socket (15). When the valve slider is moved left and right and brought to a neutral position, the precision balls (18) provide mechanical locking by entering the channel in the locking socket (15) with the locking spring (17).

Thanks to the centering spring (13), the valve slider is kept in the middle position. It is also a part of the detention mechanism as previously mentioned. The centering spring (13) provides for the detention mechanism to lock. At the same time, the precision balls (18) also provide locking. The 3 precision balls (18) at the end of the locking spring enter the channel within the locking socket (15) and provide the locking of the valve slider. The locking socket (15) bears the locking spring (17) and precision balls (18).

The main purpose of the centering mechanism is to provide the valve slider to remain in neutral position when the valve is in the middle position (position 0). The centering mechanism is composed of a spring stopper (12), centering spring (13), locking socket (15), ball socket (16), locking spring (17) and centering lid. The centering spring (13) keeps the valve slider in the middle position. The spring stopper (12) is used in the bearing of the centering spring (13). The socket (15) is necessary for the detention mechanism and comprises the detention housing. The ball socket bears the precision balls and locking spring. The locking spring (17) is required for the locking function of the detention mechanism. The centering lid keeps the centering mechanism together.

The solenoid valves are 3-way, 2-position valves. They provide the oil low based on the incoming electric signals.

The sealing member (8) is a member which prevents the hydraulic oil within the valve from going outside. At the same time, the sealing members on the valve slider prevent the pressure from passing to the other chamber of the valve slider and decrease the friction between the valve slider and the slider. There should be at least 7.

The valve channels provide the oil flow of the solenoid valves (2) and provide oil flow to the desired points of the valve slider (4) so that the valve slider (4) is moved.

When both solenoid valves (2) are deactivated, the pressure line (P) which to which the valve body is connected is open, and the return line (T) is in closed position at the pressure line side. In this position, the pressurized oil comes from the P line and reaches channel 1. Since both solenoid valves (2) are deactivated, the pressurized oil remains in channel 1.

There is pressurized oil at the piston side of the system since it opens to the tank line. Thanks to the centering spring (13) and detention behind the piston, the piston is kept in the middle position. The hydraulic diagram at "0" position is shown in Figure-1. In this position, the lifting arms remain in the position the user leaves (desires) the same.

When the first solenoid valve (2) is active and the second solenoid valve (2) is deactivated, the pressurized oil arriving at channel-1 passes from the line in solenoid-1 direction and is transferred to the wall of the piston in the "a" direction. The pressurized oil applies force to the indicated surface of the piston. This force provides the movement of the piston in the "b" direction with the tensioning of the centering spring (13) in the centering group. The oil on the other side of the piston passes from channel-2 and enters the tank line. The lifting arms are lifted up with the movement of the piston. The hydraulic diagram in position "b" is shown in Figure-2.

When the second solenoid valve (2) is active and the first solenoid valve (2) is deactivated, the pressurized oil arriving at channel-1 passes from the line at the solenoid direction and is transferred to the wall of the piston in the "b" direction. The pressurized oil applies force to the indicated surface of the piston. This force provides that the piston moves in the "a" direction by overcoming the tensile force with the compression of the spring (8) in the centering group. The oil on the other side of the piston passes from channel 2 and goes to the tank line. The lifting arms come down with the movement of the piston. The hydraulic diagram in the "a" position is shown in figure-3.

There are three positions instead of two positions in the valves used as double solenoid electro-hydraulic. Thanks to the three positions used, the system provides for the user to hold the equipment in the desired position. Additionally, since the valve is three-position, the system can have the option of being controllable by the user from the outside of the tractor with an external control arm.

In the system developed with the invention, the motion is provided with a valve slider which functions as a double-acting cylinder, one centering spring (13) and two solenoids (2). With this system, the mechanism is activated with a three-position key, without needing mechanical force. Since the valve is three-position, the system has the option of being controllable by the user from the outside of the tractor with an external control arm.

Bellows (21) was used in the valve, in order to prevent the dust, dirt, hay, etc. from the environment from entering the valve rod and causing a oil leak.

The bellows stopper (20) is a part designed for fixing the bellow to the valve body. 3 bolts are attached to the body (1) and fix the bellow (21).

In order to fix the other end of the bellows (21) (the side which is closer to the valve slider (4)) and provide that dust and dirt does not enter from this end, a clip (22) was used.

## Claims

1. Centering electro-hydraulic Lift-O-Matic system, comprising:
• a valve body (1) comprising the following valve parts:
two solenoid valves (2) providing an oil flow based on incoming electrical signals and a valve slider (4) which functions as a double-acting cylinder, one portion of the valve slider (4) extending out of the valve body (1) and valve channels which provide oil flow to the desired points of the valve slider (4) to move the valve slider (4) by pressure provided by the oil flow of the solenoid valves (2),
• a detention mechanism which keeps the valve slider (4) in a middle position when there is no pressure provided by the oil flow of the solenoid valves (2)
• a centering mechanism which provides that the valve slider remains in the middle position when there is no pressure provided by the oil flow of the solenoid valves (2),
• a bellows (21) for protecting the portion of the valve slider (4) extending out of the valve body (1) from dust, dirt, etc.
• a bellows stopper (20) to fix the bellow (21) to the valve body (1) where the portion of the valve slider (4) extends outside the valve body (1),
• a clip (22) to fix the bellow (21) to the end of the valve slider (4).

2. Centering electro-hydraulic Lift-O-Matic system of Claim 1, **characterized in that** the mentioned detention mechanism comprises;
• a locking spring (17) which provides the locking of the valve slider (4),
• at least one precision ball (18) which provides the locking of the valve slider (4),
• a locking socket (15) bearing the locking spring (17) and the at least one precision ball (18) in the detention mechanism.

3. Centering electro-hydraulic Lift-O-Matic system of Claim 1, **characterized in that** the mentioned centering mechanism comprises;
• a centering spring (13) providing the valve slider to remain in the middle position,
• a spring stopper (12) providing the bearing of the centering spring (13),
• a locking socket (15), providing a detention housing for the detention mechanism,
• a ball socket (16) bearing precision balls (18) of the detention mechanism and a locking spring (17) of the detention mechanism,
• the locking spring (17) providing the locking of the valve slider (4),
• a centering lid (9) holding the centering mechanism together.

4. Centering electro-hydraulic Lift-O-Matic system of Claim 1, **characterized in that** it comprises at least one sealing member (8) which prevents the hydraulic oil within the valve body (1) from going outside.

5. Centering electro-hydraulic Lift-O-Matic system of Claim 1, **characterized in that** it comprises two buttons configured to provide an internal and external control by the user from the inside and outside οf a tractor.

## Patentansprüche

1. Elektrohydraulisches Lift-O-Matic-System mit Zentrierung, umfassend:
• einen Ventilkörper (1), der die folgenden Ventilteile umfasst:
zwei Magnetventile (2), die basiert auf die eingehenden elektrischen Signale einen Ölfluss vorsehen, und einen Ventilschieber (4), der als ein doppeltwirkender Zylinder fungiert, wobei sich ein Teil des Ventilschiebers (4) aus dem Ventilkörper (1) und aus den Ventilkanälen nach außen erstreckt, die zu den gewünschten Punkten des Ventilschiebers (4) den Ölfluss vorsehen, um den Ventilschieber (4) durch den vom Ölfluss der Magnetventile (2) vorgesehenen Druck zu bewegen,
• einen Haltemechanismus, der den Ventilschieber (4) in einer Mittelstellung hält, wenn keinen Druck vom Ölfluss der Magnetventile (2) vorgesehen wird,
• einen Zentriermechanismus, der vorsieht, dass der Ventilschieber in der Mittelstellung bleibt, wenn keinen Druck vom Ölfluss der Magnetventile (2) vorgesehen wird,
• ein Faltenbalg (21) zum Schützen von dem sich aus dem Ventilkörper (1) nach außen erstreckenden Teil des Ventilschiebers (4) vor Staub, Schmutz usw.,
• einen Faltenbalg-Stopper (20) zur Befestigung vom Faltenbalg (21) an dem Ventilkörper (1) an der Stelle, an der sich der Teil des Ventilschiebers (4) aus dem Ventilkörper (1) nach außen erstreckt,
• eine Klammer (22) zur Befestigung des Faltenbalges (21) am Ende des Ventilschiebers (4).

2. Elektrohydraulisches Lift-O-Matic-System mit Zentrierung nach Anspruch 1, **dadurch gekennzeichnet, dass** der genannte Haltemechanismus umfasst;
• eine Verriegelungsfeder (17), die die Verriegelung des Ventilschiebers (4) vorsieht,
• mindestens eine Präzisionskugel (18), die die Verriegelung des Ventilschiebers (4) vorsieht,
• einen Verschlusssockel (15), der die Verriegelungsfeder (17) und mindestens eine Präzisionskugel (18) in dem Haltemechanismus trägt.

3. Elektrohydraulisches Lift-O-Matic-System mit Zentrierung nach Anspruch 1, **dadurch gekennzeichnet, dass** der genannte Zentriermechanismus umfasst:
• eine Zentrierfeder (13), die vorsieht, dass der Ventilschieber in der Mittelstellung bleibt,
• einen Federstopper (12), der vorsieht, dass die Zentrierfeder (13) getragen wird,
• einen Verschlusssockel (15), der ein Halte-Gehäuse für den Haltemechanismus vorsieht,
• einen Kugelsockel (16), der die Präzisionskugeln (18) des Haltemechanismus und die Verriegelungsfeder (17) des Haltemechanismus trägt,
• eine Verriegelungsfeder (17), die die Verriegelung des Ventilschiebers (4) vorsieht,
• einen Zentrierdeckel (9), der den Zentriermechanismus zusammenhält.

4. Elektrohydraulisches Lift-O-Matic-System mit Zentrierung nach Anspruch 1, **dadurch gekennzeichnet, dass** es mindestens ein Dichtungselement (8) umfasst, das verhindert, das Hydrauliköl innerhalb des Ventilkörpers (1) nach draußen zu gehen.

5. Elektrohydraulisches Lift-O-Matic-System mit Zentrierung nach Anspruch 1, **dadurch gekennzeichnet, dass** es zwei Tasten umfasst, die dazu ausgebildet sind, eine interne und externe Kontrolle vom Nutzer von innen und außen eines Traktors vorzusehen.

## Revendications

1. Système Lift-O-Matic électro-hydraulique de centrage, comprenant :
• un corps de vanne (1) comprenant les pièces de vanne suivantes :
deux électrovannes (2) fournissant un flux d'huile basé sur des signaux électriques entrants et un coulisseau de vanne (4) qui fonctionne comme un cylindre à double effet, une portion du coulisseau de vanne (4) s'étendant hors du corps de vanne (1) et des canaux de vanne qui fournissent un flux d'huile aux points souhaités du coulisseau de vanne (4) pour déplacer le coulisseau de vanne (4) par la pression fournie par le flux d'huile des électrovannes (2),
• un mécanisme de retenue qui maintient le coulisseau de vanne (4) dans une position intermédiaire lorsqu'il n'y a pas de pression fournie par le flux d'huile des électrovannes (2),
• un mécanisme de centrage qui assure que le coulisseau de vanne reste en position intermédiaire lorsqu'il n'y a pas de pression fournie par le flux d'huile des vannes solénoïdes (2),
• un soufflet (21) pour protéger la portion du coulisseau de vanne (4) s'étendant hors du corps de vanne (1) de la poussière, de la saleté, etc.
• un bouchon de soufflet (20) pour fixer le soufflet (21) au corps de vanne (1) où la portion du coulisseau de vanne (4) s'étend hors du corps de vanne (1),
• un clip (22) pour fixer le soufflet (21) à l'extrémité du coulisseau de vanne (4).

2. Système Lift-O-Matic électro-hydraulique de centrage selon la revendication 1, **caractérisé en ce que** le mécanisme de retenue mentionné comprend;
• un ressort de verrouillage (17) qui fournit le verrouillage du coulisseau de vanne (4),
• au moins une bille de précision (18) qui fournit le verrouillage du coulisseau de vanne (4),
• une douille de verrouillage (15) portant le ressort de verrouillage (17) et au moins une bille de précision (18) dans le mécanisme de retenue.

3. Système Lift-O-Matic électro-hydraulique de centrage selon la revendication 1, **caractérisé en ce que** le mécanisme de centrage mentionné comprend;
• un ressort de centrage (13) fournissant le coulisseau de vanne pour rester dans la position intermédiaire,
• un bouchon de ressort (12) fournissant le portage du ressort de centrage (13),
• une douille de verrouillage (15) fournissant un logement de détention pour le mécanisme de détention,
• une douille à bille (16) portant des billes de précision (18) du mécanisme de retenue et un ressort de verrouillage (17) du mécanisme de retenue,
• le ressort de blocage (17) fournissant le verrouillage du coulisseau de vanne (4),
• un couvercle de centrage (9) maintenant le mécanisme de centrage ensemble.

4. Système Lift-O-Matic électro-hydraulique de centrage selon la revendication 1, **caractérisé en ce qu'**il comprend au moins un élément d'étanchéité (8) qui empêche l'huile hydraulique à l'intérieur du corps de vanne (1) de sortir.

5. Système Lift-O-Matic électro-hydraulique de centrage selon la revendication 1, **caractérisé en ce qu'**il comprend deux boutons configurés pour fournir une commande interne et externe par l'utilisateur de l'intérieur et de l'extérieur d'un tracteur.
